# EUROPÄISCHE PATENTSCHRIFT

(11) **EP 3 034 979 B1**
(45) Veröffentlichungstag und Bekanntmachung des Hinweises auf die Patenterteilung: **06.02.2019**
(21) Anmeldenummer: 15198759.1
(22) Anmeldetag: 09.12.2015
(51) Int. Cl.: F28F 9/02, F02B 29/04, F28D 7/16, F28D 21/00, F02M 26/32, F02M 26/28

(54) **ABGASWÄRMEÜBERTRAGER**
EXHAUST GAS HEAT EXCHANGER
ÉCHANGEUR THERMIQUE DE GAZ DE COMBUSTION

(30) Priorität: 19.12.2014 DE 102014119227
(43) Veröffentlichungstag der Anmeldung: 22.06.2016
(73) Patentinhaber: Benteler Automobiltechnik GmbH, 33102 Paderborn (DE)
(72) Erfinder: Lempa, Christoph, 33154 Salzkotten (DE); Strunin, Wassilij, 33100 Paderborn (DE)
(74) Vertreter: Griepenstroh, Jörg

(56) Entgegenhaltungen:
- WO-A1-2013/022072
- DE-A1-102005 028 806
- DE-A1-102006 045 535
- JP-A- 2003 314 928
- JP-A- 2009 114 923
- KR-B1- 100 748 756

## Beschreibung

Die Erfindung betrifft einen Abgaswärmeübertrager zur Übertragung von Wärme zwischen dem Abgas einer Brennkraftmaschine eines Kraftfahrzeuges und einem Kühlmittel gemäß den Merkmalen im Oberbegriff von Anspruch 1.

Abgaswärmeübertrager und deren Aufbau sowie Funktionsweise sind beispielsweise durch die EP 2 436 897 A2, die DE 601 19 740 T2 oder die DE 199 07 163 C2 bekannt. Solche Wärmeübertrager kommen insbesondere als Abgasrückführungskühler oder auch Ladeluftkühler in Kraftfahrzeugen zum Einsatz.

Jeder Abgaswärmeübertrager benötigt Kühlmittelanschlüsse zur Zu- und Abführung von Kühlmittel. In der Regel sind die Anschlüsse als axiale Rohrstutzen ausgeführt, die mit dem Gehäuse gefügt sind. Externe Kühlmittelübergabestellen werden meistens mit Rohren versehen. Bauraumbedingt und aus Kostengründen sind die Kühlmittelübergabestellen nahe am Kühler. Um die jeweilige Position am Gehäuse des Abgaswärmeübertragers erreichen zu können, sind teilweise kleine Biegeradien an Rohrleitungen oder Aushalsungen am Gehäuse bzw. Gehäusemantel sowie zusätzliche Stanz- oder Frästeile erforderlich. Dies ist sowohl herstellungs- als auch montagetechnisch verbesserungswürdig.

Die DE 10 2011 077 459 A1 offenbart eine Verbindungsanordnung zwischen einem Anschlussrohr und einem an einem Wärmeübertrager vorgesehenem Verbindungspartner, wobei der Verbindungspartner zumindest eine formkomplementär zum Anschlussrohr ausgebildete Durchtrittsöffnung und zumindest eine Aufnahmeöffnung aufweist, in die das Endstück des Anschlussrohres zumindest bereichsweise unter Ausbildung eines Presssitzes eingesteckt werden kann. Der Verbindungspartner weist einen Aufnahmebereich für Lotmaterial auf, wobei sich der Aufnahmebereich am axial äußeren Ende der Durchtrittsöffnung erstreckt. Das Lotmaterial ist in dem Aufnahmebereich angeordnet.
Aus der WO 2013/022072 A1 ist ein Abgaswärmeübertrager bekannt, bei dem ein Rohrstück unter Eingliederung eines medium distributors an einem Gehäuse gekoppelt ist. WO 2013/022072 A1 beschreibt einen Abgaswärmeübertrager gemäß dem Oberbegriff des Anspruchs 1. Ferner ist aus der KR 100 748 756 B1 ein Rohrstück bekannt, welches eine einstückig und werkstoffeinheitlich ausgebildete Flanschfläche aufweist und das Rohrstück mit der Flanschfläche an einem Gehäuse eines Abgaswärmeübertragers gekoppelt ist.
Der Erfindung liegt ausgehend vom Stand der Technik die Aufgabe zugrunde, einen Abgaswärmeübertrager aufzuzeigen mit einer funktional und bauraumtechnisch verbesserten Verbindung zwischen Gehäuse und einem Kühlmittelanschluss.
Die Lösung dieser Aufgabe besteht nach der Erfindung in einem Abgaswärmeübertrager gemäß den Merkmalen von Anspruch 1.
Vorteilhafte Ausgestaltungen und Weiterbildungen der Erfindung sind Gegenstand der abhängigen Ansprüche 2 bis 8.
Erfindungsgemäß weist zumindest ein Anschluss, insbesondere der Kühlmittelzulaufanschluss, ein Rohrstück auf mit einer an seinem Außenumfang ausgebildeten Fügefläche zur Festlegung des Rohrstückes am Gehäuse des Abgaswärmeübertragers und einer seitlich am Rohrstück angeordneten Überleitungsöffnung, welche mit einer Durchlassöffnung im Gehäuse kommuniziert.
Die Übergangsleitungsöffnung bzw. die Flächennormale der Überleitungsöffnung ist quer zur Längsachse des Rohrstücks ausgerichtet.

Quer zur Längsachse bedeutet, die Überleitungsöffnung bzw. die sich durch den Flächenmittelpunkt der Überleitungsöffnung erstreckende Flächennormale in einem Winkel zur Längsachse ausgerichtet. Die Ausrichtung der Überleitungsöffnung erfolgt schräg zur Längsachse bzw. steht zur Längsachse in einem Winkel größer 0° und kleiner 180°. Insbesondere ist die Ausrichtung in einem Winkel von 45° bis 135°, vorzugsweise in einem Winkel von 90° +/- 30° ausgerichtet. In praktischer Ausgestaltung ist insbesondere eine Ausrichtung der Überleitungsöffnung rechtwinklig quer zur Längsachse vorgesehen. Die Überleitungsöffnung ist seitlich in bzw. an der Rohrwand des Rohrstücks vorgesehen.

Die Erfindung schafft einen Abgaswärmeübertrager mit einem bauraumtechnisch vorteilhaften, platzsparenden und kostengünstigen Kühlmittelanschluss. Der Kühlmittelanschluss ist durch ein Rohrstück gebildet, welches radial am Gehäuse des Abgaswärmeübertragers angebracht ist und an der vorgesehenen Überleitungsstelle des Kühlmittels mit einer Überleitungsöffnung versehen ist. Das Rohrstück kann an der Überleitungsstelle vorzugsweise geplättet sein. An das Rohrstück können an dessen freiem Ende Rohrleitungskomponenten angeschlossen werden. Hierzu sind am freien Ende des Rohrstückes entsprechende Koppelelemente vorgesehen. Bei den Koppelelementen kann es sich beispielsweise um einen Dichtwulst handeln, insbesondere um eine angestauchte, radial umlaufende Dichtwulst am freien Ende des Rohrstückes. Das andere gehäuseseitige Ende des Rohrstückes ist stirnseitig verschlossen. Dies kann durch eine Stirnwand, ebenso wie durch eine Endkappe oder einen Stopfen bzw. ein Endstück geschehen.

Eine vorteilhafte Ausgestaltung sieht vor, dass das Rohrstück sich zu seinem gehäuseseitigen Ende hin verjüngt. Vorteilhaft ist das Rohrstück an seinem gehäuseseitigen Ende durch eine Abplattung verschlossen. Die Rohrwand des Rohrstücks ist hierbei gestaucht und zusammengedrückt, so dass die Rohrwand bzw. Rohrwandabschnitte flach aneinander liegen. Insbesondere sind die Rohrwandabschnitte im Bereich der Abplattung fluiddicht miteinander gefügt.

Insgesamt wird die Erreichbarkeit der Überleitungsöffnung bzw. Durchlassöffnung im Gehäuse des Abgaswärmeübertragers erleichtert und verbessert. Der erfindungsgemäße Kühlmittelanschluss ermöglicht auch das Erreichen von in der Einbaulage des Abgaswärmeübertragers ungünstig gelegenen Anschlussstellen bzw. Durchlassöffnungen im Gehäuse.

Die Fügefläche ist durch eine Abflachung an der Rohrwand des Rohrstückes gebildet.

Eine weitere vorteilhafte Ausgestaltung sieht vor, dass die Überleitungsöffnung durch ein in die Rohrwand des Rohrstückes gestanztes Loch gebildet ist. Die Überleitungsöffnung kann auch durch ein gefrästes oder ein gelasertes Loch in der Rohrwand des Rohrstücks hergestellt sein. Eine besonders effektive Überleitung des Kühlmittels erfolgt, wenn die Überleitungsöffnung als Langloch ausgebildet ist. Weiterhin können auch mehrere Überleitungsöffnungen vorgesehen sein. So ist es möglich, dass zwei oder mehr Löcher die Überleitungsöffnung bilden. Hierbei sind die Löcher insbesondere in Reihe in Längsrichtung des Rohrstücks angeordnet.

Die Durchlassöffnung im Gehäuse ist strömungstechnisch für eine vorteilhafte Überleitung des Kühlmittels in bzw. aus den Abgaswärmeübertrager konfiguriert. Auch die Durchlassöffnung im Gehäuse bzw. dem Gehäusemantel kann als Rund- oder Langloch ausgebildet sein. Ein Aspekt sieht vor, dass ein oder mehrere Löcher in Reihe in Längsrichtung des Rohrstücks angeordnet sind.

Ein weiterer Aspekt der Erfindung sieht vor, dass die Fügefläche eine an die Außenkontur des Gehäuses angepasste Anschlusskontur besitzt. Insbesondere weist die Fügefläche eine zur Anbindungsfläche am Gehäuse kongruente Ausgestaltung auf. Das Rohrstück des Kühlmittelanschlusses erstreckt sich radial am Gehäuse. An das freie Ende des Rohrstückes kann eine Kühlmittelleitung angeschlossen werden.

Weiterhin ist vorteilhaft, dass das Gehäuse eine Anbindungsfläche für das Rohrstück bzw. einen Teil des Rohrstückes aufweist. Die Anbindungsfläche ist insbesondere kongruent zum Außenumfang des Rohrstückes im Bereich des Kühlmittelüberganges gestaltet. So kann der Aufnahmeabschnitt halbrund ausgestaltet sein, um das Rohrstück aufnehmen zu können.

Bei der Ausgestaltung des Rohrstückes mit einer abgeflachten bzw. geplätteten Fügefläche ist die Anbindungsfläche im Gehäuse entsprechend eben gestaltet. Diese Ausgestaltung ist sowohl fertigungs- als auch montagetechnisch vorteilhaft.

Insbesondere sind das Rohrstück und das Gehäuse miteinander stoffschlüssig gefügt, vorzugsweise verlötet.

Der Abgaswärmeübertrager und dessen Komponenten bestehen aus Metall, insbesondere Stahlwerkstoffen, bevorzugt Edelstahl. Der Abgaswärmeübertrager oder Bauteilkomponenten von ihm können auch aus Leichtmetall, insbesondere Aluminium bestehen.

Zur Herstellung des Kühlmittelanschlusses wird das Rohrstück bereichsweise geplättet und mit einem Dorn auf die Endgeometrie aufkalibriert. Anschließend wird die Überleitungsöffnung in die Rohrwand im abgeplätteten Bereich gestanzt, gefräst oder gelasert. Grundsätzlich können auch mehrere in Längsrichtung in Reihe angeordnete Überleitungsöffnungen im Rohrstück vorgesehen sein. Diese Ausgestaltung kann vorteilhafte Auswirkungen für die Verteilung des Kühlmittels innerhalb der Wärmeübertragereinheit im Gehäuse des Abgaswärmeübertragers haben.

Eine andere Variante eines Rohrschiebers sieht vor, dass ein Teil bzw. Teilstück der Rohrwand des Rohrstückes entfernt ist, um so die Fügefläche und die radial ausgerichtete Überleitungsöffnung zu schaffen.

Die Erfindung ist nachfolgend anhand von in den Zeichnungen dargestellten Ausführungsbeispielen näher beschrieben. Es zeigen:
- Figur 1: eine erste Ausführungsform eines erfindungsgemäßen Abgaswärmeübertragers in einer perspektivischen Darstellung;
- Figur 2: den Abgaswärmeübertrager gemäß der Figur 1 in einer Seitenansicht;
- Figur 3: die Darstellung gemäß der Figur 2 in einer Draufsicht;
- Figur 4: den Abgaswärmeübertrager in einer Stirnansicht;
- Figur 5: den Kühlmittelanschluss des Abgaswärmeübertragers in einer perspektivischen Ansicht;
- Figur 6: eine zweite Ausführungsform eines erfindungsgemäßen Abgaswärmeübertragers in einer perspektivischen Ansicht;
- Figur 7: den Abgaswärmeübertrager gemäß der Figur 6 in einer Seitenansicht;
- Figur 8: den Abgaswärmeübertrager in einer Draufsicht;
- Figur 9: den Abgaswärmeübertrager in einer Stirnansicht;
- Figur 10: den Kühlmittelanschluss des Abgaswärmeübertragers gemäß der Figur 6 in einer perspektivischen Ansicht;
- Figur 11: einen Ausschnitt aus einem Abgaswärmeübertrager entsprechend der Figur 6 im Bereich des Kühlmittelanschlusses in einer Perspektive;
- Figur 12: eine andere Ausführungsform eines Kühlmittelanschlusses in einer Perspektive;
- Figur 13: eine weitere Ausführungsform eines erfindungsgemäßen Abgaswärmeübertragers in einer perspektivischen Ansicht;
- Figur 14: den Kühlmittelanschluss des Abgaswärmeübertragers gemäß der Figur 13 in einer perspektivischen Ansicht;
- Figur 15: eine Abwandlung des Abgaswärmeübertragers gemäß der Figur 13 in einer Perspektive;
- Figur 16: eine weitere Ausführungsform eines erfindungsgemäßen Abgaswärmeübertragers in einer perspektivischen Darstellung;
- Figur 17: den Kühlmittelanschluss des Abgaswärmeübertragers gemäß der Figur 16 in einer perspektivischen Ansicht und
- Figur 18: den Abgaswärmeübertrager gemäß der Darstellung von Figur 16 in einer Perspektive mit einer Ansicht auf den Kühlmittelübergang.

Einander entsprechende Bauteile und Bauteilkomponenten sind in allen Figuren mit den gleichen Bezugszeichen versehen.

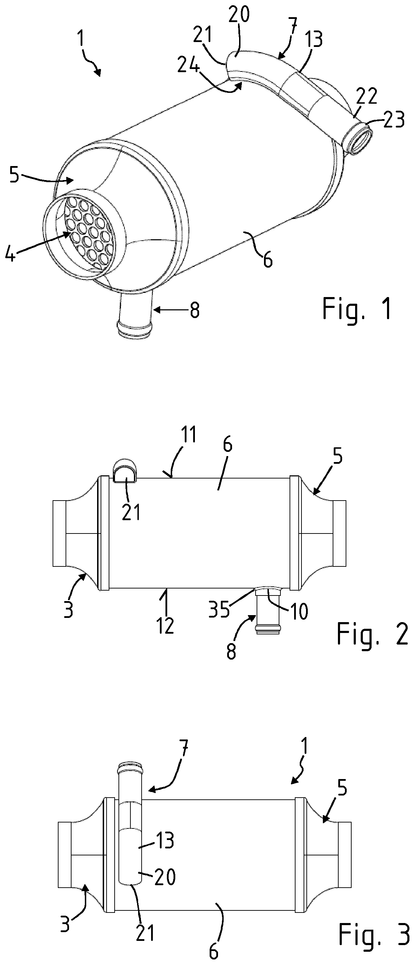

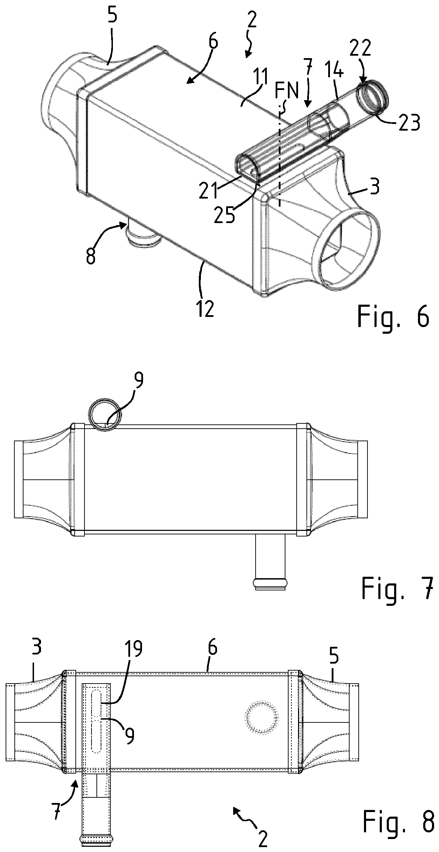

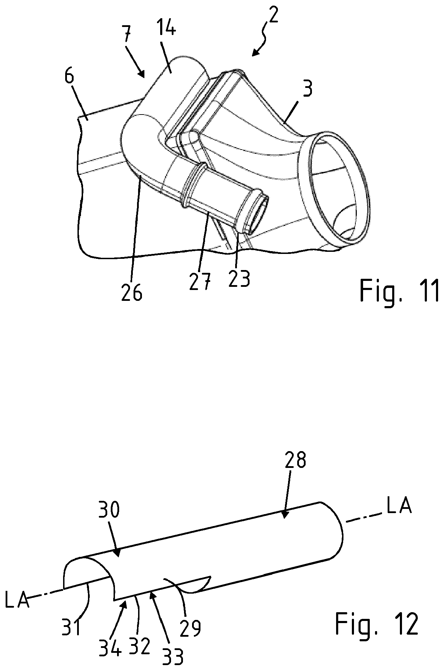

Anhand der Figuren 1 bis 5 ist eine erste Ausführungsform eines Abgaswärmeübertragers 1 beschrieben. Die Figuren 6 bis 10 zeigen eine zweite Ausführungsform eines Abgaswärmeübertragers 2. Figur 11 zeigt eine Modifikation des Abgaswärmeübertragers 2.

Die Abgaswärmeübertrager 1, 2 werden insbesondere als Abgasrückführungskühler in einem Kraftfahrzeug eingesetzt. Heißes Abgas strömt über einen Einströmdiffusor 3 ein und wird im Inneren der Abgaswärmeübertrager 1, 2 mittels einer Wärmetauschereinheit 4, insbesondere einem Rohrbündel oder einem Plattenpaket zu einem Ausströmdiffusor 5 geführt, aus dem das gekühlte Abgas abströmt. Im Bereich zwischen den Diffusoren 3, 5 ist die Wärmetauschereinheit 4 von einem Gehäuse 6 umgeben. Durch das Gehäuse 6 wird ein flüssiges Kühlmittel geführt, welches die Wärmetauschereinheit 4 umströmt. Das Kühlmittel wird an einem Kühlmittelzulaufanschluss 7 zugeführt und an einem Kühlmittelablaufanschluss 8 abgeführt. Zur Einleitung von Kühlmittel über den Kühlmittezulaufanschluss 7 sowie zur Ableitung von Kühlmittel über den Kühlmittelablaufanschluss 8 sind im Gehäuse 6 Durchlassöffnungen 9, 10 vorgesehen. Der Kühlmittelzulaufanschluss 7 und der Kühlmittelablaufanschluss 8 liegen auf einander gegenüberliegenden Seiten 11, 12 des Gehäuses 6. Vorliegend ist der Kühlmittelzulaufanschluss 7 auf der in Bildebene gesehenen Oberseite 11 des Gehäuses 6 und der Kühlmittelablaufanschluss 8 auf der Unterseite 12 angeordnet.

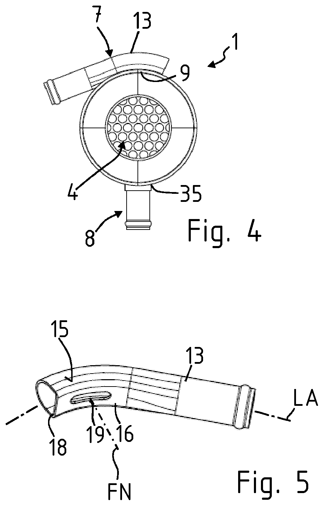

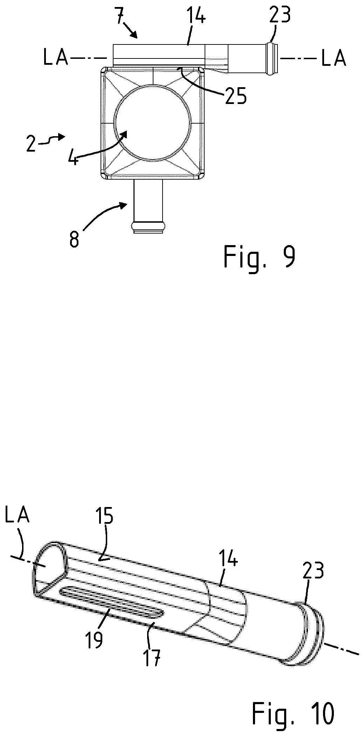

Ein Anschluss für Kühlmittel, nämlich der Kühlmittelzulaufanschluss 7, ist durch ein Rohrstück 13 bzw. 14 gebildet. Das Rohrstück 13 bzw. 14 weist an seinem Außenumfang 15 eine Fügefläche 16, 17 zur Festlegung am Gehäuse 6 auf. Die Fügefläche 16, 17 ist durch eine Abflachung der Rohrwand 18 des Rohrstückes 13, 14 gebildet (siehe hierzu insbesondere Figuren 5 und 10).

Im Bereich der abgeflachten Fügefläche 16, 17 weist das Rohrstück 13, 14 eine seitlich abgehende Überleitungsöffnung 19 auf, welche mit der Durchlassöffnung 9 im Gehäuse 6 kommuniziert und fluidleitend in Verbindung steht. Die Überleitungsöffnung 19 ist quer zur Längsachse LA des Rohrstückes 13, 14 ausgerichtet. Die Flächennormale der Überleitungsöffnung 19 ist mit FN gekennzeichnet.

Die Fügefläche 16, 17 besitzt eine an die Außenkontur des Gehäuses 6 angepasste Anschlusskontur.

Das Rohrstück 13 bzw. 14 ist sowohl beim Abgaswärmeübertrager 1 als auch beim Abgaswärmeübertrager 2 radial am Gehäuse 6 angebracht. Das gehäuseseitige Ende 20 des Rohrstückes 13, 14 ist durch eine Stirnwand 21 verschlossen. Am freien Ende 22 des Rohrstückes 13, 14 sind Verbindungsmittel 23 in Form einer radial umlaufenden Dichtwulst zur Ankopplung von vorgeschalteten Rohrleitungskomponenten vorgesehen.

Wie wiederum insbesondere die Figuren 5 und 10 erkennen lassen, ist die Überleitungsöffnung 19 durch ein Langloch gebildet. Das Langloch ist in die Rohrwand 18 gestanzt und erstreckt sich in Längsrichtung der abgeplatteten Fügefläche 16, 17.

Das Gehäuse 6 des Abgaswärmeübertragers 1 ist rund gestaltet. In kongruenter Ausgestaltung hierzu weist das Rohrstück 13 eine an die Außenkontur des Gehäuses 6 angepasste gekrümmte bzw. kreisabschnittsförmig gestaltete Fügefläche 16 auf. Die Anbindungsfläche 24 am Gehäuse 6 ist kongruent gestaltet. Das freie Ende 22 des Rohrstückes 13 erstreckt sich tangential abgehend vom Gehäuse 6 weg.

Das Gehäuse 6 des Abgaswärmeübertragers 2 ist im Querschnitt rechteckig gestaltet. Das Rohrstück 14 verläuft geradlinig quer zur Längsrichtung des Gehäuses 6. Die Fügefläche 17 des Rohrstückes 14 ist eben geradlinig konfiguriert. Das Gehäuse 6 weist eine zur Fügefläche 17 kongruent ausgestaltete Anbindungsfläche 25 auf.

Bei der Ausgestaltung des Abgaswärmeübertragers 2, wie in der Figur 11 dargestellt, geht das Rohrstück 14 über einen Bogenabschnitt 26 in einen geradlinig verlaufenden freien Endabschnitt 27 des Kühlmittelzulaufanschlusses 7 über.

Eine andere Ausgestaltung eines Rohrstückes 28 zeigt die Figur 12. Bei dieser Ausführungsform ist die Rohrwand 29 in einem gehäuseseitigen Endabschnitt 30 auf einem Teilstück entfernt. Die Längskanten 31, 32 im entfernten Bereich bilden eine Fügefläche 33. Die Überleitungsöffnung 34 ist quer zur Längsachse LA des Rohrstückes 28 ausgerichtet.

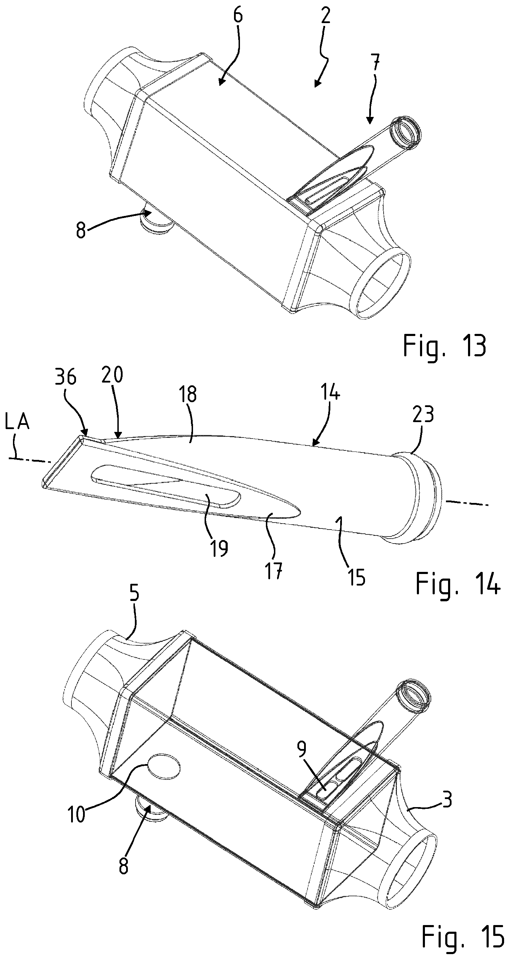

Auch der in den Figuren 13 bis 15 dargestellte Abgaswärmeübertrager 2 weist ein in Querschnitt rechtseckig ausgeführtes Gehäuse 6 auf. Der Kühlmittelzulaufanschluss 7 ist durch ein Rohrstück 14 gebildet, welches an seinem Außenumfang 15 eine Fügefläche 17 zur Festlegung am Gehäuse 6 aufweist. Die Fügefläche 17 ist durch eine Abflachung der Rohrwand 18 des Rohrstücks 14 gebildet. Im Bereich der Fügefläche 17 weist das Rohrstück 14 eine seitlich angeordnete Überleitungsöffnung 19 auf. Die Überleitungsöffnung 19 ist quer zur Längsachse LA des Rohrstücks 14 ausgerichtet. Die Überleitungsöffnung 19 ist ein Langloch, welches mit zwei Durchlassöffnungen 9 im Gehäuse 6 kommuniziert und mit diesem fluidleitend in Verbindung steht. Das Rohrstück 14 verjüngt sich zu seinem gehäuseseitigen Ende 20 hin. Hierbei ist das gehäuseseitige Ende 20 durch eine Abplattung 36 verschlossen. Man erkennt, dass die Rohrwand am gehäuseseitigen Ende 20 gestaucht und aufeinander geplättet ist.

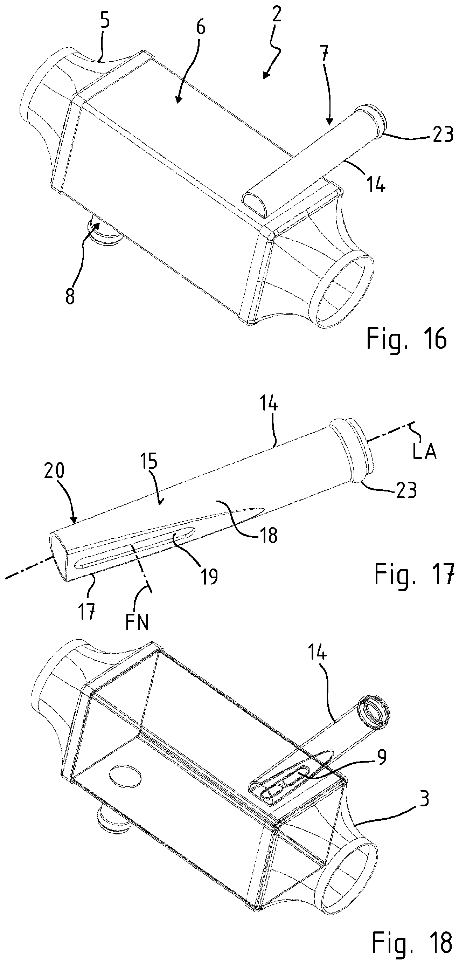

Konfigurativ gleichartig ist der Abgaswärmeübertrager 2 ausgebildet, wie in den Figuren 16 bis 18 dargestellt. Das Rohrstück 14 verläuft gradlinig quer zur Längsrichtung des Gehäuses 6. Das Rohrstück 14 verjüngt sich zum gehäuseseitigen Ende 20 hin. Hierbei ist eine Fügefläche 17 durch eine Abflachung der Rohrwand am gehäuseseitigen Endabschnitt 20 des Rohrstücks 14 ausgebildet. Die Fügefläche 17 ist parabelförmig konfiguriert. Die Überleitungsöffnung 19 ist durch ein Langloch gebildet. Die Überleitungsöffnung 19 erstreckt sich in Längsrichtung des Rohrstücks und ist seitlich an bzw. in der Rohrwand des Rohrstücks angeordnet. Hierbei ist die Überleitungsöffnung 19 bzw. die Flächennormale der Überleitungsöffnung 19 quer zur Längsachse LA des Rohrstücks 14 ausgerichtet, so dass der Durchschuss von Kühlmittel seitlich aus dem Rohrstück 14 und in das Gehäuse 6 des Abgaswärmeübertragers 2 erfolgt. Die Überleitungsöffnung kommuniziert mit zwei Durchlassöffnungen 9 in der oberen Seitenwand des Gehäuses 6. Durch Durchlassöffnungen 9 sind Langlöcher.

Der Kühlmittelanschluss 7 der Abgaswärmeübertrager 2, wie anhand der Figuren 13 bis 15 bzw. 16 bis 18 erläutert, weist ein Rohrstück 14 auf, welches radial am Gehäuse 6 angebracht ist. Die Fügefläche 17 ist jeweils an die Außenkontur des Gehäuses 6 durch eine Anschlusskontur angepasst. Am freien Ende 22 des Rohrstücks 14 sind Verbindungsmittel 23 vorgesehen.

In den dargestellten Ausführungsbeispielen ist der Kühlmittelzulaufanschluss 7 in erfindungsgemäßer Weise ausgestaltet. Der Kühlmittelablaufanschluss 8 ist mit seiner gehäuseseitigen Stirnseite 35 an das Gehäuse 6 angesetzt und dort gefügt. Der Kühlmittelablaufanschluss 8 steht fluidleitend mit der Durchlassöffnung 10 im Gehäuse 6 in Verbindung. Es versteht sich, dass auch der Kühlmittelablaufanschluss 8 erfindungsgemäß ausgestaltet ist mit einem Rohrstück entsprechend der Ausgestaltung wie anhand dem Kühlmittelzulaufanschluss 7 beschrieben.

### Bezugszeichen:

- 1 -: Abgaswärmeübertrager
- 2 -: Abgaswärmeübertrager
- 3 -: Einströmdiffusor
- 4 -: Wärmetauschereinheit
- 5 -: Ausströmdiffusor
- 6 -: Gehäuse
- 7 -: Kühlmittelzulaufanschluss
- 8 -: Kühlmittelablaufanschluss
- 9 -: Durchlassöffnung
- 10 -: Durchlassöffnung
- 11 -: Oberseite von 6
- 12 -: Unterseite von 6
- 13 -: Rohrstück
- 14 -: Rohrstück
- 15 -: Außenumfang
- 16 -: Fügefläche
- 17 -: Fügefläche
- 18 -: Rohrwand
- 19 -: Überleitungsöffnung
- 20 -: gehäuseseitiges Ende von 13, 14
- 21 -: Stirnwand
- 22 -: freies Ende von 13, 14
- 23 -: Verbindungsmittel
- 24 -: Anbindungsfläche
- 25 -: Anbindungsfläche
- 26 -: Bogenabschnitt
- 27 -: Endabschnitt
- 28 -: Rohrstück
- 29 -: Rohrwand
- 30 -: Endabschnitt
- 31 -: Längskante
- 32 -: Längskante
- 33 -: Fügefläche
- 34 -: Überleitungsöffnung
- 35 -: gehäuseseitige Stirnseite von 8
- 36 -: Abplattung

- LA -: Längsachse
- FN -: Flächennormale

## Patentansprüche

1. Abgaswärmeübertrager (1, 2) zur Übertragung von Wärme zwischen dem Abgas einer Brennkraftmaschine eines Kraftfahrzeuges und einem Kühlmittel mit einem Gehäuse (6), welches Anschlüsse (7, 8) zur Zu- und Abführung von Kühlmittel aufweist, wobei ein Anschluss (7, 8) ein Rohrstück (13, 14; 28) aufweist, **dadurch gekennzeichnet, dass** das Rohrstück (13, 14, 28) mit einer an seinem Außenumfang (15) ausgebildeten Fügefläche (16, 17) am Gehäuse (6) festgelegt ist und eine quer zur Längsachse (LA) des Rohrstücks (13, 14; 28) ausgerichtete Überleitungsöffnung (19; 34) aufweist, welche mit einer Durchlassöffnung (9, 10) im Gehäuse (6) kommuniziert, wobei die Fügefläche (16, 17) durch eine Abflachung der Rohrwand (18) des Rohrstückes (13, 14) gebildet ist.

2. Abgaswärmeübertrager nach Anspruch 1, **dadurch gekennzeichnet, dass** die Fügefläche (16, 17) eine an die Außenkontur des Gehäuses (6) angepasste Anschlusskontur besitzt.

3. Abgaswärmeübertrager nach Anspruch 1 oder 2, **dadurch gekennzeichnet, dass** das Rohrstück (13, 14) radial am Gehäuse (6) angebracht ist.

4. Abgaswärmeübertrager nach wenigstens einem der Ansprüche 1 bis 3, **dadurch gekennzeichnet, dass** die Überleitungsöffnung (19) durch ein oder mehrere Löcher in den Rohrwänden (18), insbesondere durch ein Langloch, gebildet ist.

5. Abgaswärmeübertrager nach wenigstens einem der Ansprüche 1 bis 4, **dadurch gekennzeichnet, dass** das Gehäuse (6) eine zur Fügefläche (16, 17) des Rohrstückes (13, 14) kongruent ausgestaltete Anbindungsfläche (24, 25) aufweist.

6. Abgaswärmeübertrager nach wenigstens einem der Ansprüche 1 bis 5, **dadurch gekennzeichnet, dass** sich das Rohrstück (14) zu seinem gehäuseseitigen Ende (20) hin verjüngt.

7. Abgaswärmeübertrager nach wenigstens einem der Ansprüche 1 bis 6, **dadurch gekennzeichnet, dass** das gehäuseseitige Ende (20) des Rohrstücks (13, 14) stirnseitig verschlossen ist.

8. Abgaswärmeübertrager nach wenigstens einem der Ansprüche 1 bis 7, **dadurch gekennzeichnet, dass** das Rohrstück (14) an seinem gehäuseseitigen Ende (20) durch eine Abplattung (36) verschlossen ist.

## Claims

1. Exhaust gas heat exchanger (1, 2) for transferring heat between the exhaust gas of an internal combustion engine of a motor vehicle and a cooling means with a housing (6), which has connections (7, 8) for supplying and removing the cooling means, wherein a connection (7, 8) has a tube piece (13, 14; 28), **characterised in that** the tube piece (13, 14, 28) is fixed to the housing (6) with a joint surface (16, 17) formed on its outer circumference (15) and has a transfer opening (19; 34) aligned transversely to the longitudinal axis (LA) of the tube piece (13, 14; 28), which communicates with a through-opening (9, 10) in the housing (6), wherein the joint surface (16, 17) is formed by a flattened portion of the tube wall (18) of the tube piece (13, 14).

2. Exhaust gas heat exchanger according to claim 1, **characterised in that** the joint surface (16, 17) possesses a connection contour adapted to the outer contour of the housing (6).

3. Exhaust gas heat exchanger according to claim 1 or 2, **characterised in that** the tube piece (13, 14) is radially attached to the housing (6).

4. Exhaust gas heat exchanger according to at least one of claims 1 to 3, **characterised in that** the transfer opening (19) is formed by one or a plurality of holes in the tube walls (18), in particular by an elongate hole.

5. Exhaust gas heat exchanger according to at least one of claims 1 to 4, **characterised in that** the housing (6) has a connecting surface (24, 25) formed congruently with the joint surface (16, 17) of the tube piece (13, 14).

6. Exhaust gas heat exchanger according to at least one of claims 1 to 5, **characterised in that** the tube piece (14) tapers towards its housing-side end (20).

7. Exhaust gas heat exchanger according to at least one of claims 1 to 6, **characterised in that** the housing-side end (20) of the tube piece (13, 14) is closed at the end face.

8. Exhaust gas heat exchanger according to at least one of claims 1 to 7, **characterised in that** the tube piece (14) is closed at its housing-side end (20) by a flattened portion (36).

## Revendications

1. Echangeur thermique de gaz de combustion (1, 2) pour le transfert de chaleur entre les gaz de combustion d'un moteur à combustion interne d'un véhicule automobile et un moyen de refroidissement avec un boîtier (6), qui présente des raccords (7, 8) pour l'amenée et l'évacuation du moyen de refroidissement, dans lequel un raccord (7, 8) présente une pièce tubulaire (13, 14; 28), **caractérisé en ce que** la pièce tubulaire (13, 14, 28) est fixée avec une surface d'assemblage (16, 17) réalisée sur sa périphérie extérieure (15) sur le boîtier (6) et présente une ouverture de transfert (19 ; 34) orientée transversalement à l'axe longitudinal (LA) de la pièce tubulaire (13, 14; 28), qui communique avec une ouverture de passage (9, 10) dans le boîtier (6), dans lequel la surface d'assemblage (16, 17) est formée par un aplatissement de la paroi tubulaire (18) de la pièce tubulaire (13, 14).

2. Echangeur thermique de gaz de combustion selon la revendication 1, **caractérisé en ce que** la surface d'assemblage (16, 17) possède un contour de raccordement adapté au contour extérieur du boîtier (6).

3. Echangeur thermique de gaz de combustion selon la revendication 1 ou 2, **caractérisé en ce que** la pièce tubulaire (13, 14) est montée radialement sur le boîtier (6).

4. Echangeur thermique de gaz de combustion selon au moins l'une quelconque des revendications 1 à 3, **caractérisé en ce que** l'ouverture de transfert (19) est formée par un ou plusieurs trous dans les parois tubulaires (18), en particulier par un trou oblong.

5. Echangeur thermique de gaz de combustion selon au moins l'une quelconque des revendications 1 à 4, **caractérisé en ce que** le boîtier (6) présente une surface de liaison (24, 25) configurée de manière congruente à la surface d'assemblage (16, 17) de la pièce tubulaire (13, 14).

6. Echangeur thermique de gaz de combustion selon au moins l'une quelconque des revendications 1 à 5, **caractérisé en ce que** la pièce tubulaire (14) se rétrécit vers son extrémité (20) côté boîtier.

7. Echangeur thermique de gaz de combustion selon au moins l'une quelconque des revendications 1 à 6, **caractérisé en ce que** l'extrémité (20) côté boîtier de la pièce tubulaire (13, 14) est fermée côté avant.

8. Echangeur thermique de gaz de combustion selon au moins l'une quelconque des revendications 1 à 7, **caractérisé en ce que** la pièce tubulaire (14) est fermée sur son extrémité côté boîtier (20) par un aplatissement (36).
